# EUROPEAN PATENT APPLICATION

(11) **EP 4 737 023 A1**
(43) Date of publication of application: **06.05.2026**
(21) Application number: 24831407.2
(22) Date of filing: 07.05.2024
(51) Int. Cl.: B08B 3/02, B08B 5/04, B32B 27/00, C08J 11/06

(54) **COATING PEELING DEVICE AND COATING PEELING METHOD**

(30) Priority: 27.06.2023 JP 2023105037
(71) Applicant: Toray Industries, Inc., Tokyo 103-8666 (JP)
(72) Inventor: HIGASHIDA, Yoshihisa, Otsu-shi, Shiga 520-8558 (JP); TANINO, Kiyoshi, Otsu-shi, Shiga 520-8558 (JP); WATANABE, Kazutaka, Otsu-shi, Shiga 520-8558 (JP)
(74) Representative: Hoefer & Partner Patentanwälte mbB
(86) International application number: PCT/JP2024/016975
(87) International publication number: WO 2025/004534

(57) **Abstract**

Provided are a coating film removing device and a coating film removing method capable of reducing a coating film remaining on a base film. A coating film removing device of the present invention is a coating film removing device that removes a coating film containing a water-soluble resin from a coated film including the coating film on at least one surface of a base film and includes: a conveyance mechanism configured to convey the coated film; a cleaning liquid applying mechanism configured to apply a cleaning liquid to a surface of the coating film; a coating film removing mechanism that is disposed on a downstream side of the cleaning liquid applying mechanism in a conveyance direction, the cleaning liquid applying mechanism being configured to remove the coating film containing the cleaning liquid from the coated film in which the cleaning liquid is applied to the surface of the coating film; a cleaning liquid reapplying mechanism that is disposed on a downstream side of the coating film removing mechanism in the conveyance direction, the cleaning liquid reapplying mechanism being configured to apply the cleaning liquid to the surface of the coating film remaining on the base film; and a suction mechanism that is disposed on a downstream side of the cleaning liquid reapplying mechanism in the conveyance direction, the suction mechanism being configured to suck residues of the coating film remaining on the base film together with the cleaning liquid.

## Description

### Field

The present invention relates to a coating film removing device and a coating film removing method capable of efficiently removing a coating film on a surface of a base film.

### Background

While a plastic is used in various fields, a plastic such as a microplastic is considered to be a cause of marine pollutions, and reduction of environmental load by a plastic is urgently needed.

In recent years, with evolution of Internet of Things (IoT), the number of electronic devices mounted on computers and smartphones, such as CPU, has increased, and as a result, the number of multilayer ceramic capacitors (MLCCs) required to drive the electronic devices has also rapidly increased. A general method for manufacturing this MLCC includes a step of forming a ceramic green sheet layer on a release film obtained by forming a release layer on a plastic base film using the release film as a carrier sheet, and a step of removing the ceramic green sheet layer to form a ceramic green sheet. In these steps, the release film from which the ceramic sheet has been removed is discarded as an unnecessary material.

That is, an increase in the number of release films as a waste due to a rapid increase in the number of manufactured MLCCs in recent years is an environmental problem, and efforts for reuse of a base film have been activated. A component of a release layer contained in the release film generally has a different composition from a component constituting the base film from a viewpoint of releasability. Therefore, when the release film with the release layer is remelted as it is to form a regenerated film, the component of the release layer is present as a foreign substance, and therefore stable film formation cannot be performed.

Patent Literature 1 discloses, as a method for removing a release layer containing a water-soluble resin from a release film, a method in which a cleaning liquid in a form of droplets is applied to the release layer, the cleaning liquid is held in the form of droplets on a surface of the release layer, and then the release layer containing the cleaning liquid is removed.

### Citation List

### Patent Literature

Patent Literature 1: WO 2022/190713 A

### Summary

### Technical Problem

The removing method of Patent Literature 1 has a problem that when a surface roughness of a base film is large or when there is a scratch, a coating film, particularly a water-soluble resin layer formed in contact with the base film remains, and the quality of the base film as a recycled chip is deteriorated.

Therefore, an object of the present invention is to provide a coating film removing device and a coating film removing method capable of reducing a coating film remaining on a base film.

### Solution to Problem

[1] A coating film removing device of the present invention that solves the above problems is a coating film removing device that removes a coating film containing a water-soluble resin from a coated film including the coating film on at least one surface of a base film. The device includes: a conveyance mechanism configured to convey the coated film; a cleaning liquid applying mechanism configured to apply a cleaning liquid to a surface of the coating film; a coating film removing mechanism that is disposed on a downstream side of the cleaning liquid applying mechanism in a conveyance direction, the cleaning liquid applying mechanism being configured to remove the coating film containing the cleaning liquid from the coated film in which the cleaning liquid is applied to the surface of the coating film; a cleaning liquid reapplying mechanism that is disposed on a downstream side of the coating film removing mechanism in the conveyance direction, the cleaning liquid reapplying mechanism being configured to apply the cleaning liquid to the surface of the coating film remaining on the base film; and a suction mechanism that is disposed on a downstream side of the cleaning liquid reapplying mechanism in the conveyance direction, the suction mechanism being configured to suck residues of the coating film remaining on the base film together with the cleaning liquid.
   The coating film removing device of the present invention is preferably any one of the following [2] to [4].
[2] The coating film removing device according to [1}, in which the suction mechanism is a suction roll including a tubular main body portion including a hollow portion therein and having a plurality of holes, and a roll layer made of a nonwoven fabric and formed on an outer peripheral portion of the main body portion.
[3] The coating film removing device according to [1] or [2], in which the suction mechanism includes a speed control mechanism configured to control a rotation speed of the suction roll.
[4] The coating film removing device according to [2] or [3], in which the suction mechanism includes: a back roll disposed at a position facing the suction roll with the coated film interposed therebetween; and a nip mechanism configured to presses the suction roll and/or the back roll against the coated film.
[5] A coating film removing method of the present invention that solves the above problems is a coating film removing method for removing a coating film containing a water-soluble resin from a coated film including the coating film on at least one surface of a base film using the coating film removing device according to any one of [1] to [4]. The method includes: while conveying the coated film, applying a cleaning liquid to a surface of the coating film and bringing the coating film removing mechanism into contact with the surface of the coating film to remove the coating film containing the cleaning liquid; and thereafter, applying the cleaning liquid to the surface remaining on the base film to suck and remove residues of the coating film remaining on the base film together with the cleaning liquid.
   The coating film removing method of the present invention is preferably the following [6].
[6] The coating film removing method according to [5], in which the coating film contains a curable silicone.

### Advantageous Effects of Invention

According to the coating film removing device and the coating film removing method of the present invention, it is possible to reduce a coating film remaining on a base film and to obtain a recycled chip having excellent quality.

### Brief Description of Drawings

FIG. 1 is a schematic view of a coating film removing device according to an embodiment of the present invention.
FIG. 2 is a cross-sectional view of a suction mechanism used in FIG. 1 parallel to a film width direction.
FIG. 3 is a schematic view of a coating film removing device according to Modification 1 of the embodiment of the present invention.
FIG. 4 is a schematic view of a coating film removing device according to Modification 2 of the embodiment of the present invention.

### Description of Embodiments

Hereinafter, an embodiment of the present invention will be described with reference to the drawings. Note that the following description exemplifies the embodiment according to the present invention, the present invention is not limited thereto, and various modifications and combinations can be made without departing from the gist of the present invention.

### (Embodiment)

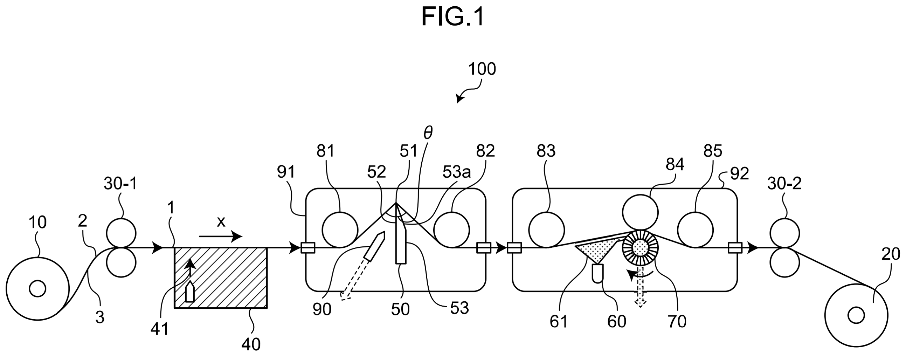

FIG. 1 is a schematic view of a coating film removing device 100 of the present invention. The coating film removing device 100 includes: an unwinding device 10 that unwinds a film 1 (hereinafter, also referred to as a coated film) including a coating film 3 on one surface of a base film 2; a winding device 20 that winds the base film 2 from which the coating film 3 on a surface of the coated film 1 has been removed; and driving devices 30-1 and 30-2 for conveying the film in a direction of an arrow X in a state where tension is applied to the film. In addition, in the coating film removing device 100, between the driving devices 30-1 and 30-2, a cleaning liquid applying mechanism 40 that applies a cleaning liquid 41 to a surface of the coating film 3 of the coated film 1, a coating film removing mechanism 50 that is disposed on a downstream side of the cleaning liquid applying mechanism 40 in a conveyance direction and removes the coating film 3 containing the cleaning liquid 41 from the coated film 1 in which the cleaning liquid 41 is applied to the surface of the coating film 3, a cleaning liquid reapplying mechanism 60 that is disposed on a downstream side of the coating film removing mechanism 50 in the conveyance direction and applies a cleaning liquid 61 to the surface of the coating film 3 remaining on the base film 2, a suction mechanism 70 that is disposed on a downstream side of the cleaning liquid reapplying mechanism 60 in the conveyance direction and sucks residues of the coating film 3 remaining on the base film 2 together with the cleaning liquid 61, rollers 81, 82, 83, 84, and 85 that control a conveyance direction of the coated film 1 or the base film 2, and a suction member 90 that sucks the coating film 3, which is a removed product removed by the coating film removing mechanism 50 are disposed. Hereinafter, the coating film removing device 100 according to the present embodiment will be described.

### [Coated film]

In the coating film removing device 100 of the present invention, the coated film 1 to be removed includes the coating film 3 on at least one surface of the base film 2. The coated film 1 to be removed is a coated film including a coating film containing a water-soluble resin in consideration of environmental load and the like. In particular, as the water-soluble resin, those containing at least one of a water-soluble polyester-based resin, a polyester urethane-based resin, an acrylic resin, an ethylene ionomer-based resin, a polyvinyl alcohol-based resin, a polyvinyl pyrrolidone-based resin, an ethylenevinyl alcohol-based resin, and starch as a main component are more preferable.

The coating film containing a water-soluble resin may be a single layer body containing a water-soluble resin, a stacked body of two or more layers containing a water-soluble resin, or a stacked body of a layer containing a water-soluble resin and a layer not containing a water-soluble resin.

A coating film-attached release film containing a release component in addition to a water-soluble resin in a part of the coating film is particularly preferable, and can efficiently exhibit a coating film removing effect. The release component here is a component that increases a contact angle of a coating film surface with respect to a cleaning liquid, that is, a component that reduces surface energy of the coating film, and examples thereof include a curable silicone resin compound having dimethylsiloxane as a main skeleton, a compound having a long chain alkyl group, and a compound having fluorine. The coating film may be a layer containing a water-soluble resin and a release component, or may have stacked layers of a layer containing a water-soluble resin and a layer containing a release component. In a case of a coating film of stacked layers, preferably, a layer containing a water-soluble resin is formed immediately above the base film, and then a layer containing a release component is formed on an outermost surface. As the release component, it is particularly preferable to use a curable silicone resin compound having dimethylsiloxane having high water permeability as a main skeleton, which can be suitably used as a cleaning liquid.

### [Coating film removing device]

In order to stably convey the coated film 1 and the base film 2 from which the coating film 3 has been removed, each of the driving devices 30-1 and 30-2 preferably has a configuration capable of performing tension cut. When the tension cut is performed with a suction roll, a part of the coating film of the coated film 1 may be sucked, which may cause a trouble. Therefore, a configuration in which the coated film 1 is nipped with a metallic drive roll and a rubber roll is more suitably used. For the driving devices 30-1 and 30-2, stainless steel or one that has been surface-treated as a rust prevention measure is suitably used.

The cleaning liquid applying mechanism 40 includes a discharge nozzle that discharges the cleaning liquid 41, a liquid feeding pump that feeds the cleaning liquid 41 to the discharge nozzle, and a tank that stores the cleaning liquid 41.

The amount of the cleaning liquid to be applied to a coating film surface of the coated film 1 can be preferably 1 cm³/m² or more such that at least some components of the coating film can be sufficiently dissolved, and it is preferable to control the liquid feeding pump according to a conveyance speed of the coated film 1 to determine specifications of the discharge head and the liquid feeding pump such that a necessary amount of the cleaning liquid 41 can be applied to the coating film surface of the coated film 1. The discharge nozzle only needs to be able to apply the cleaning liquid 41 to the coating film surface of the coated film 1, and examples thereof include a spray, a shower head nozzle, and a jet nozzle for high-pressure water.

The cleaning liquid applying mechanism 40 only needs to be able to apply the cleaning liquid 41 to the coating film surface of the coated film 1, and may include a liquid tank storing the cleaning liquid 41 to immerse the coated film 1 in the liquid tank to apply the cleaning liquid 41 to the coating film surface.

The cleaning liquid 41 used in the coating film removing device 100 exhibits its effect with any solvent as long as the solvent can dissolve at least some components of the coating film, but water is preferably used in order to reduce environmental load. In addition, a surfactant or the like may be added to the cleaning liquid 41 in order to improve wettability with the coated film to make the cleaning liquid 41 easily spread over the coating film surface.

In order to dissolve at least some components of the coating film quickly, it is preferable to apply the heated cleaning liquid 41 to the coating film surface of the coated film 1. When a discharge head is used, the discharge head may include a heat source such as a cartridge heater, or a tank that stores the cleaning liquid 41 may be heated. When the liquid tank is used, the liquid tank may be heated, or a throw-in heater may be disposed inside the liquid tank. Any means that can heat the cleaning liquid 41 may be used, and the present invention is not limited thereto.

The coating film removing mechanism 50 has an edge 51 that extends in a ridge line shape in the film width direction and comes into contact with a surface of the coating film 3 of the coated film 1 to remove the coating film 3. The edge 51 includes a surface 52 on an upstream side in a film conveyance direction, a surface 53 on a downstream side in the film conveyance direction, and a side surface between the upstream surface 52 and the downstream surface 53. The surface 53 on the downstream side in the film conveyance direction has a gradient 53a in order to make the edge 51 acute. The coating film removing mechanism 50 is preferably made of metal, but is not limited thereto, and may be made of resin. The coating film removing mechanism 50 is disposed so as to face the coating film surface of the coated film 1.

The suction member 90 sucks the coating film 3 which is a removed product removed by the coating film removing mechanism 50. In order to improve removability of the coating film 3 from the coated film 1, it is necessary to strongly press the edge 15 against the coated film 1. In the present embodiment, a conveying direction of the coated film 1 is controlled by the rollers 81 and 82, an angle θ between the coated film 1 and the base film 2 is reduced, and the edge 51 is strongly pressed against the coated film 1. When the angle θ between the coated film 1 and the base film 2 is reduced, removability by the coating film removing mechanism 50 is improved, but the removed coating film 3 may be reattached to the base film 2. Therefore, the removed coating film 3 is preferably sucked and removed by the suction member 90. Note that the rollers 81 and 82, the coating film removing mechanism 50, and the suction member 90 are surrounded by a booth 91. When the heated cleaning liquid 41 is used in order to dissolve at least some components of the coating film 3 quickly, it is preferable to keep the temperature and moisture of the cleaning liquid applying mechanism 40 by also surrounding the cleaning liquid applying mechanism 40 by the booth 91.

The cleaning liquid reapplying mechanism 60 includes a discharge nozzle that discharges the cleaning liquid 61 and a liquid feeding pump that feeds the cleaning liquid 61 to the discharge nozzle. Similarly to the cleaning liquid applying mechanism 40, the cleaning liquid reapplying mechanism 60 may have a tank for storing the cleaning liquid 61. The cleaning liquid 61 may be any solvent as long as it is a solvent capable of dissolving at least some components of the coating film 3, and may be the same as or different from the cleaning liquid 41, but in order to reduce environmental load, water is preferably used.

The amount of the cleaning liquid 61 applied to a coating film surface of the base film 2 may be any amount that can dissolve the coating film 3 remaining on the base film 2. In order to improve removal performance of the remaining coating film 3, it is preferable to apply the heated cleaning liquid 61 to the surface of the base film 2.

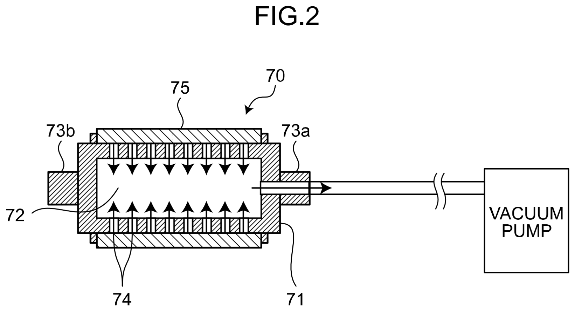

The suction mechanism 70 sucks residues of the coating film 3 remaining on the base film 2 together with the cleaning liquid 61 applied to the base film 2 by the cleaning liquid reapplying mechanism 60. As the suction mechanism 70, a suction roll or the like can be used. FIG. 2 is a cross-sectional view of the suction mechanism 70 used in FIG. 1 parallel to a film width direction. The suction mechanism 70 includes a tubular main body portion 71 including a hollow portion 72 therein, and a roll layer 75 made of a nonwoven fabric and formed on an outer peripheral portion of the main body portion 71.

The main body portion 71 includes joint portions 73a and 73b at both ends, the joint portion 73b at one end is closed, and the joint portion 73a at another end is connected to a suction device such as a vacuum pump. The main body portion 71 is made of a metal material such as iron, SUS, or aluminum, and has a plurality of circular hole portions 74 formed in an outer peripheral portion in a staggered manner. The cleaning liquid 61 containing the components of the coating film 3 sucked by the roll layer 75 is discharged from the joint portion 73a to the outside of the suction mechanism 70 via the hole portions 74 and the hollow portion 72.

In addition, the joint portion 73b may be connected to a blower or the like without being closed, and air may be intermittently introduced from the joint portion 73b to urge drainage from the hollow portion 72. Furthermore, in the above embodiment, the hollow portion 72 has a cylindrical shape in which a cross section perpendicular to a central axis of the main body portion 71 is the same from the joint portion 73a side to the joint portion 73b side, but may have a conical shape in which the cross section increases toward the joint portion 73b side.

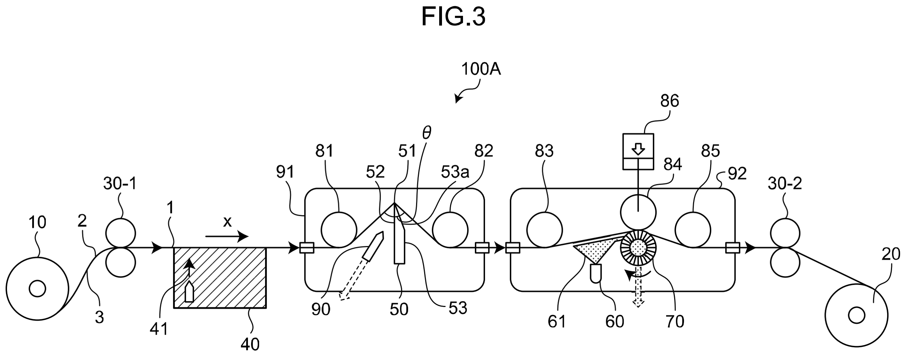

FIG. 3 is a schematic view of a coating film removing device 100A of Modification 1 of the present invention. The roller 84 is disposed so as to face the suction mechanism 70 with the base film 2 interposed therebetween. Note that, as illustrated in FIG. 3, the roller 84 is preferably equipped with a nip mechanism 86. By applying a pressing force to the base film 2 by the nip mechanism 86, the suction amount of the cleaning liquid 61 containing the remaining coating film 3 by the suction mechanism 70 can be increased. Furthermore, an effect of damming up the cleaning liquid 61 containing the coating film 3 so as not to flow out to a downstream side of the suction mechanism 70 in a conveyance direction is also enhanced. As the nip mechanism 86, a cylinder or the like can be used. Note that the nip mechanism 86 may be disposed not on the roller 84 side but disposed on the suction mechanism 70 side, or may be disposed both on the roller 84 side and on the suction mechanism 70 side.

The rollers 83 and 85 control a conveyance direction of the base film 2, and change a relative position thereof with respect to the suction mechanism 70 to control a contact area between the base film 2 and the suction mechanism 70. The suction mechanism 70 is preferably used by being rotated about a central axis of the main body portion 71 as a rotation axis. When the suction mechanism 70 is rotated, the rotation is performed in the same direction as the conveyance direction of the base film 2 and at a peripheral speed substantially the same as a conveyance speed, whereby the base film 2 can be stably conveyed without generating slack or extremely high tension of the base film 2 before and after the suction mechanism 70. The peripheral speed of the suction mechanism 70 may be either free rotation or driving rotation as long as the peripheral speed is substantially the same as the conveyance speed of the base film 2. In a case of the driving rotation, a speed control mechanism that controls a rotation speed of the main body portion 71 of the suction mechanism 70 is preferably included.

Note that the rollers 83 to 85, the cleaning liquid reapplying mechanism 60, and the suction mechanism 70 are surrounded by a booth 92.

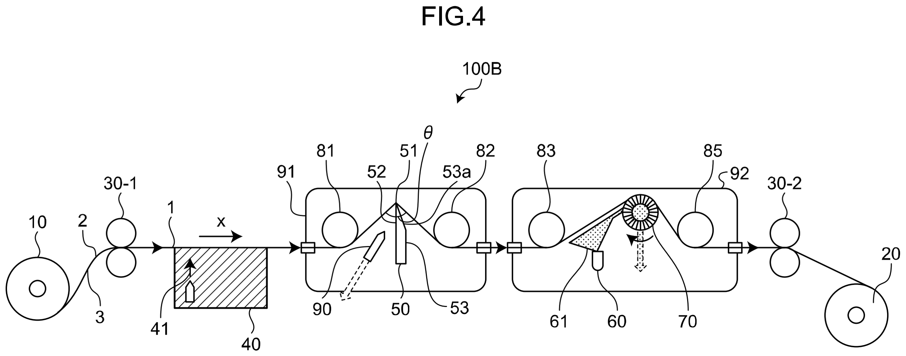

FIG. 4 is a schematic view of a coating film removing device 100B of Modification 2 of the present invention. The coating film removing device 100B is obtained by removing the roller 84 disposed so as to face the suction mechanism 70 with the base film 2 interposed therebetween from the coating film removing device 100 illustrated in FIG. 1, and changing a relative position between the rollers 83 and 85 and the suction mechanism 70 to increase a contact area between the base film 2 and the suction mechanism 70.

Since the coating film removing device 100B does not include the roller 84, the base film 2 can be intentionally slid and conveyed on the suction mechanism 70, and a relative speed difference can be generated between the conveyance speed of the base film 2 and the peripheral speed of the suction mechanism 70. This makes it possible to create a state in which the suction mechanism 70 wipes a surface of the base film 2.

In addition, a wiping distance per unit time increases by increasing the relative speed difference. In addition, by increasing the contact area, a section in which suction is performed is increased. Therefore, ability to remove the cleaning liquid 61 containing components of the coating film 3 tends to be improved. However, when a holding force of the base film 2 by the suction mechanism 70 is large and the base film 2 is not slippery, slack or extremely high tension of the base film 2 may occur before and after the suction mechanism 70, which may hinder conveyance. Therefore, the relative speed difference and the contact area are preferably determined while a conveyance state of the base film 2 is confirmed.

In addition, a rotation direction of the suction mechanism 70 is preferably determined while a conveyance state of the base film 2 is confirmed, and may be either the same direction as the conveyance direction or a direction opposite thereto as long as a relative speed difference is generated.

Note that, in the coating film removing devices 100, 100A, and 100B, in order to confirm the quality of the base film 2 from which the coating film 3 has been removed by the coating film removing mechanism 40, an inspection machine (not illustrated) that detects residues of the coating film 3 and environmental foreign substances attached in the process may be disposed before the winding device 20. The inspection machine only needs to be selected according to properties of the base film 2, and an inspection machine using transmitted light or reflected light is suitably used. In addition, a marking device (not illustrated) for recording the positions of residues of the coating film or environmental foreign substances attached in the process, detected by the inspection machine may be disposed between the inspection machine and the winding device 20. A marking method by the marking device may be any method as long as the position of a detection target can be marked, such as a pen, a seal, or a laser. By marking residues of the coating film or environmental foreign substances attached in the process, the marked place can be removed before remelting. Therefore, a regenerated film can be more stably formed, and deterioration in quality of the regenerated film can be prevented.

In the coating film removing devices 100, 100A, and 100B, it is more preferable to completely remove the cleaning liquid from the base film 2 which has been wound by the winding device 20 and from which the coating film 3 has been removed in order to stably form a film as a regenerated film after remelting the base film 2, and a drying device (not illustrated) may be disposed between the suction mechanism 70 and the winding device 20. The drying device only needs to be disposed before winding, and may be disposed either before or after the driving device 30-2.

The coating film removing device and the coating film removing method according to the present embodiment can remove the cleaning liquid containing the coating film by the suction mechanism after reapplying the cleaning liquid to the coating film remaining on the base film, and therefore can obtain a recycled chip having excellent quality without residues of the coating film.

### Reference Signs List

1 COATED FILM
2 BASE FILM
3 COATING FILM
10 UNWINDING DEVICE
20 WINDING DEVICE
30-1, 30-2 DRIVING DEVICE
40 CLEANING LIQUID APPLYING MECHANISM
41 CLEANING LIQUID
50 COATING FILM REMOVING MECHANISM
51 EDGE
52 UPSTREAM SURFACE
53 DOWNSTREAM SURFACE
53a GRADIENT
60 CLEANING LIQUID REAPPLYING MECHANISM
61 CLEANING LIQUID
70 SUCTION MECHANISM
71 MAIN BODY PORTION
72 HOLLOW PORTION
73a, 73b JOINT PORTION
74 HOLE PORTION
75 ROLL LAYER
81, 82, 83, 84, 85 ROLLER
91, 92 BOOTH
86 NIP MECHANISM
90 SUCTION MEMBER
91, 92 BOOTH
100, 100A, 100B COATING FILM REMOVING DEVICE

## Claims

1. A coating film removing device that removes a coating film containing a water-soluble resin from a coated film including the coating film on at least one surface of a base film, the device comprising:
a conveyance mechanism configured to convey the coated film;
a cleaning liquid applying mechanism configured to apply a cleaning liquid to a surface of the coating film;
a coating film removing mechanism that is disposed on a downstream side of the cleaning liquid applying mechanism in a conveyance direction, the cleaning liquid applying mechanism being configured to remove the coating film containing the cleaning liquid from the coated film in which the cleaning liquid is applied to the surface of the coating film;
a cleaning liquid reapplying mechanism that is disposed on a downstream side of the coating film removing mechanism in the conveyance direction, the cleaning liquid reapplying mechanism being configured to apply the cleaning liquid to the surface of the coating film remaining on the base film; and
a suction mechanism that is disposed on a downstream side of the cleaning liquid reapplying mechanism in the conveyance direction, the suction mechanism being configured to suck residues of the coating film remaining on the base film together with the cleaning liquid.

2. The coating film removing device according to claim 1, wherein the suction mechanism is a suction roll including a tubular main body portion including a hollow portion therein and having a plurality of holes, and a roll layer made of a nonwoven fabric and formed on an outer peripheral portion of the main body portion.

3. The coating film removing device according to claim 2, wherein the suction mechanism includes a speed control mechanism configured to control a rotation speed of the suction roll.

4. The coating film removing device according to claim 2, wherein
the suction mechanism includes:
a back roll disposed at a position facing the suction roll with the coated film interposed therebetween; and
a nip mechanism configured to presses the suction roll and/or the back roll against the coated film.

5. A coating film removing method for removing a coating film containing a water-soluble resin from a coated film including the coating film on at least one surface of a base film using the coating film removing device according to any one of claims 1 to 4, the method comprising:
while conveying the coated film,
applying a cleaning liquid to a surface of the coating film and bringing the coating film removing mechanism into contact with the surface of the coating film to remove the coating film containing the cleaning liquid; and
thereafter, applying the cleaning liquid to the surface remaining on the base film to suck and remove residues of the coating film remaining on the base film together with the cleaning liquid.

6. The coating film removing method according to claim 5, wherein the coating film contains a curable silicone.
